# EUROPÄISCHE PATENTSCHRIFT

(11) **EP 0 888 803 B1**
(45) Veröffentlichungstag und Bekanntmachung des Hinweises auf die Patenterteilung: **05.09.2001**
(21) Anmeldenummer: 98111155.2
(22) Anmeldetag: 17.06.1998
(51) Int. Cl.: B01D 46/24, F02M 35/024

(54) **Filtergehäuse**
Filter cartridge
Boîtier pour filtre

(30) Priorität: 30.06.1997 DE 19727720
(43) Veröffentlichungstag der Anmeldung: 07.01.1999
(73) Patentinhaber: SIEMENS AKTIENGESELLSCHAFT, 80333 München (DE)
(72) Erfinder: Bähr, Siegfried, 91330 Eggolsheim (DE); Ludwig, Ludwin, 91352 Hallerndorf (DE)

(56) Entgegenhaltungen:
- WO-A-95/26803
- WO-A-96/15841
- GB-A- 1 566 220
- US-A- 4 897 097

## Beschreibung

Die Erfindung betrifft ein Filtergehäuse, insbesondere ein selbstentwässerndes Filtergehäuse, mit Filtern zur Reinigung von feuchten Gasen.

Ein derartiges Filtergehäuse mit Filtern wird insbesondere im Ansaugluft-System einer Gasturbine eingesetzt. Beim Betrieb der Gasturbine werden große Mengen an Luft umgesetzt. Dabei ist die Menge an gereinigter Luft aus Luftvorratsbehältern nicht ausreichend, um die Beschaffung der benötigten Luftmenge gewährleisten zu können. Demzufolge wird Luft aus der natürlichen Umgebung entnommen. Diese natürliche Umgebungsluft weist Verschmutzungen verschiedener Art auf. Sie enthält z.B. Schmutz- und/oder Rußpartikel. Zur Vermeidung unerwünschter Verschmutzungen und daraus resultierender Beschädigungen von Turbinenteilen wird die Luft vor ihrem Eintritt in die Gasturbine gereinigt. Diese Reinigung erfolgt durch eine Vielzahl der eingangs genannten Filter, insbesondere von Luftfiltern.

Da in der Luft eine bestimmte Wassermenge, als sogenannte Luftfeuchtigkeit oder mitgetragene Wassertröpfchen (Regen), enthalten ist, kann es innerhalb der Luftfilter zur Feuchtekondensation oder Feuchteausscheidung kommen. Das dabei entstehende Kondensationswasser sammelt sich im unteren Bereich des mehrere Luftfilter umfassenden und einen in Betriebsaufstellung waagrechten Gehäuseboden aufweisenden Filtergehäuses (auch als Filterkassette bezeichnet) an. In diesem Kondensationswasser sind die Luftverunreinigungen, d.h. die Schmutz- und/oder Rußpartikel, konzentriert enthalten. Bei Verdunstung des Kondensationswassers bilden die Ruß- und/oder Schmutzpartikel einen den Innenboden des Filtergehäuses verunreinigenden Belag.

Bedingt durch den hohen Luftdurchsatz bedarf es z.B. für eine Gasturbine im Leistungsbereich von ca. 55 MW ca. 120 solcher Filtergehäuse. Die Filtergehäuse sind in mehreren Etagen übereinander angeordnet. Dabei kann eindringendes verschmutztes Kondensationswasser von benachbarten Filtergehäusen zur Verunreinigung und Beschädigung der Filter in dem betreffenden Filtergehäuse führen.

Besonders problematisch wird dieses Problem im Winter. Durch den erhöhten Betrieb von Heizungsanlagen nimmt der Anteil an Schmutz- und/oder Rußpartikeln in der Luft zu, wobei diese Schmutz- und/oder Rußpartikel wasserlöslich und damit besonders schädlich sind. Desweiteren kommt es infolge von Eisbildung des Kondensationswassers zu Beschädigungen des Filter und der Filtergehäuses.

Aus dem britischen Patent 1 566 220 ist ein Filtergehäuse mit einem darin angeordneten zylindrischen Filter bekannt, dessen untere Gehäusewand in Einbaulage schräg zur Horizontalen verläuft, so dass Wasser, das sich im unteren Gehäusebereich ansammelt, durch eine Ablauföffnung abfließen kann.

Auch aus der WO 96/15841 ist ein Filtergehäuse mit einem zylindrischen Filter bekannt, das an seiner bodenseitigen Stirnfläche kegelförmig gestaltet und mit einer zentralen Durchlassöffnung versehen ist, so dass Wasser, das sich am Boden ansammelt, bei horizontaler Einbaulage durch diese Öffnung abfließen kann.

Aufgabe der Erfindung ist es, ein Filtergehäuse der eingangs genannten Art anzugeben, bei dem das Problem der Filterverunreinigung und der damit verbundenen Betriebsprobleme verringert ist.

Diese Aufgabe wird erfindungsgemäß gelöst mit einem Filtergehäuse mit Filtern zur Reinigung von feuchten Gasen, wobei der Innenboden des Filtergehäuses eine glatte Oberfläche und bei waagerechter Betriebsaufstellung des Filtergehäuses gegenüber der Horizontalen eine Neigung aufweist, und wobei die Seitenkanten des Innenbodens mit den Seitenwänden des Filtergehäuses und / oder mit den Filtern verbunden sind.

Der Neigungswinkel des Innenbodens liegt vorzugsweise in einem Bereich von 3° bis 10° und beträgt insbesondere ca. 5°. Auf diese besonders einfache Art und Weise wird anfallendes Kondensationswasser aus dem Filtergehäuse abgeleitet, wodurch die Verunreinigungen quasi aus dem Filterbereich "entsorgt werden".

Damit das am Innenboden sich ansammelnde Kondensationswasser leicht abfließen kann, weist der Innenboden des Filtergehäuses vorzugsweise eine glatte und wasserabweisende Oberfläche auf. Dies kann zweckmäßigerweise durch Verwendung eines geeigneten Materials, z.B. eines Kunststoffes oder eines Kunstharzes, erreicht werden.

Zum Auffangen und Abführen des angesammelten Kondensationswassers weist das Filtergehäuse zweckmäßigerweise an der Bodenkante der Gehäusefront eine Ablaufrinne für das Kondensationswasser auf. Diese Ablaufrinne kann z.B. ein Strangpreßprofil sein, das an der Bodenkante der Gehäusefront befestigbar ist, z.B. durch Ankleben, Anklemmen oder Anschrauben. Zum Abführen des Kondensationswassers ist zweckmäßigerweise ein Fallrohr an der Ablaufrinne angeordnet. Die Ablaufrinnen mehrerer Filtergehäuse können miteinander verbunden sein. Das in den Ablaufrinnen angesammelte Kondensationswasser kann dann beispielsweise einem gemeinsamen Fallrohr zugeführt werden.

Damit Kondensationswasser nicht unter den Innenboden dringen kann, sind nach einer weiteren Ausgestaltung die Seitenkanten des Innenbodens mit den Seitenwänden des Filtergehäuses und/oder mit den Filtern verbunden. Beispielsweise können die Seitenkanten des Innenbodens mit den Seitenwänden des Filtergehäuses und/oder mit den Filtern verklebt oder vergossen sein. Hierzu kann ein Schmelzkleber oder Kunstharz oder ähnlicher Werkstoff, z.B. Silikon, verwendet werden.

In besonders einfacher Weise dient als Innenboden ein Einschubelement, dessen Bodenfläche einen Neigungswinkel α gegenüber der Horizontalen aufweist. Je nach Aufbau des Filtergehäuses sowie je nach Anordnung der Filter in dem Filtergehäuse können mehrere Einschubelemente vorgesehen sein. Die Form des Einschubelementes ist an die Form des Filtergehäuses oder an die Segmentteile des Filtergehäuses angepaßt.

Das Einschubelement weist zweckmäßigerweise gehäusefrontseitig ein niedriges und rückwandseitig ein höheres Fußteil auf, so daß mit einer die beiden Fußteile verbindenden Platte die gewünschte Neigung des Einschubelementes und demzufolge die gewünschte Neigung des Innenbodens erzielt wird.

Alternativ dazu dient als Innenboden vorzugsweise mindestens ein Anguß-Element. Dabei wird der Bodenbereich des Gehäuses mit Flüssigkunststoff, Harz oder Schmelzkleber vergossen. Analog zu dem Einschubelement kann das Anguß-Element die gesamte Bodenfläche des Filtergehäuses ausfüllen. Ist das Filtergehäuse in mehrere Segmente geteilt, ist für jedes Segment jeweils ein Anguß-Element vorgesehen.

Zweckmäßigerweise wird bei der Herstellung eines Filtergehäuses mit mindestens einem Anguß-Element das vorgefertigte Filtergehäuse derart schräg aufgestellt, daß sich eine Neigung des Bodenbereiches in Richtung der Rückwand des Filtergehäuses ergibt. Anschließend wird der Bodenbereich oder werden die einzelnen Segmente des Filtergehäuses mit Flüssigkunststoff, z.B. Polyurethan, Harz oder Schmelzkleber, vergossen. Der danach erhärtete Kunststoff weist dann eine glatte und geodätisch waagerechte Oberfläche auf.

Bei der waagrechten Aufstellung des Filtergehäuses ergibt sich dann ein zur Kassettenfront hin geneigter Innenboden des Filtergehäuses. Infolge des Vergießens schließt der so hergestellte Innenboden an seinen Seitenkanten dicht mit dem Filtergehäuse und/oder mit den Filtern ab. Somit erübrigt sich ein zusätzliches seitliches Verkleben oder Vergießen.

Die mit der Erfindung erzielten Vorteile bestehen insbesondere darin, daß durch einen geneigten Innenboden des Filtergehäuses mit einer glatten Oberfläche eine selbsttätige Entwässerung des Filtergehäuses gewährleistet ist. Durch Ableitung des anfallenden Kondensationswassers in der an dem Filtergehäuse gegebenenfalls angeordneten Ablaufrinne ist ein Beschädigen oder zusätzlichen Verschmutzen von nachfolgenden Filtern vermieden.

Ausführungsbeispiele der Erfindung werden anhand einer Zeichnung näher erläutert. Darin zeigen:
- Figur 1: ein Filtergehäuse in räumlicher Darstellung,
- Figur 2: ein Filtergehäuse in Seitenansicht,
- Figur 3: ein Einschubelement, und
- Figur 4: eine Ablaufrinne.

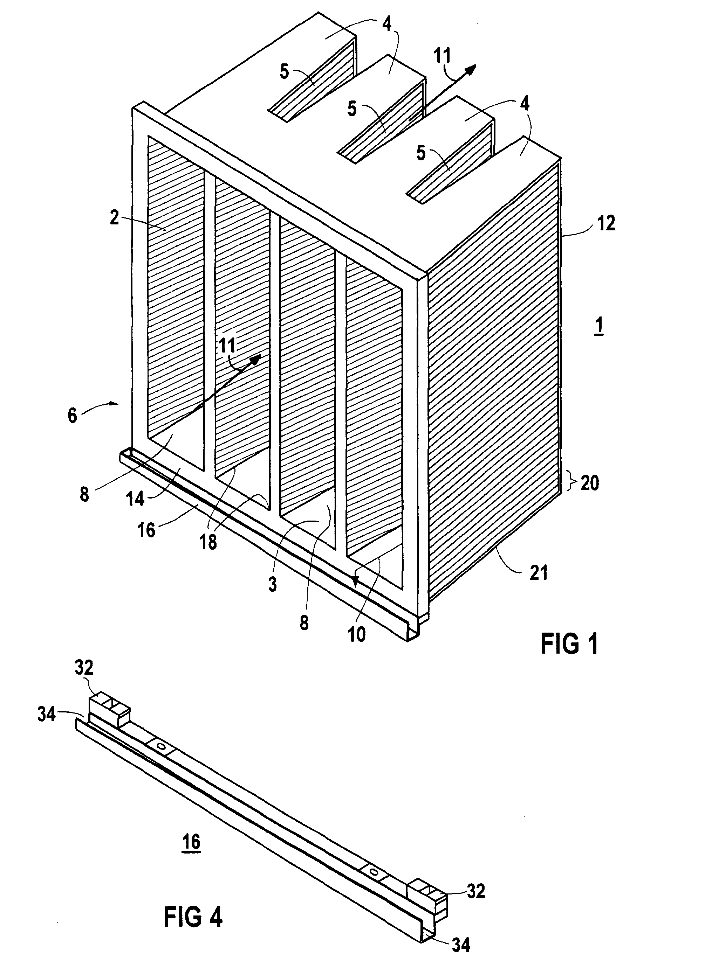

Figur 1 zeigt ein Filtergehäuse 1 mit einer Anzahl von Filtern 2. Das Filtergehäuse 1 ist in vier Segmenten 4 aufgeteilt und in Form eines Kammes ausgebildet. Die Segmente 4 bilden dabei quasi die Zacken des Kammes. Die Filter 2, z.B. Papierfilter oder Glasfaserfilter, bilden die Seitenflächen 5 jedes Segmentes 4. Das Filtergehäuse 1 weist an seiner Gehäusefront 6 für jedes Segment 4 eine Öffnung 8 auf. Jedes Segment 4 besitzt einen Innenboden 3, der eine zur Gehäusefront 6 gerichtete Neigung aufweist. Die Richtung der Neigung und die Strömungsrichtung des zu reinigenden Gases sind durch einen Pfeil 10 bzw. 11 angedeutet.

Das Filtergehäuse 1 umfaßt für jedes Segment 4 eine Rückwand 12. In Richtung der Öffnungen 8 ist an der Bodenkante 14 der Gehäusefront 6 eine Ablaufrinne 16 angeordnet. An den Seitenkanten 18 ist der jeweilige Innenboden 3 der Segmente 4 mit den Filtern 2 verbunden.

Indem die Luft an der Gehäusefront 6 eintritt und seitlich an den Filtern 2 oder an der Rückwand 12 des Filtergehäuses 1 austritt, wird das Gas, z. B. die Luft, gereinigt. Das sich an den im wesentlichen senkrechten Filtern 2 abscheidende Kondensationswasser fließt in den einzelnen Segmenten 4 nach unten in Richtung des jeweiligen Innenbodens 3 des Filtergehäuses 1.

Bedingt durch die zur Gehäusefront 6 gerichtete Neigung des Innenbodens 3 fließt das Kondensationswasser von der Rückwand 12 in Richtung der Gehäusefront 6 ab. In der an der Bodenkante 14 angeordneten Ablaufrinne 16 wird das Kondensationswasser gesammelt. Somit ist ein Eindringen des Kondensationswassers des Filtergehäuses 1 in ein weiteres, darunterliegendes Filtergehäuse (nicht dargestellt) vermieden.

Um ein Eindringen des Kondensationswassers in den Bodenbereich 20 zwischen dem Gehäuseboden 21 und den Innenböden 3 zu verhindern, sind die Seitenkanten 18 des Innenbodens 3 mit den jeweiligen Filtern 2 der zugehörigen Segmente 4 verbunden. Beispielsweise sind die Filter 2 mit den Seitenkanten 18 mittels Kunstharz oder Schmelzkleber vergossen bzw. verklebt.

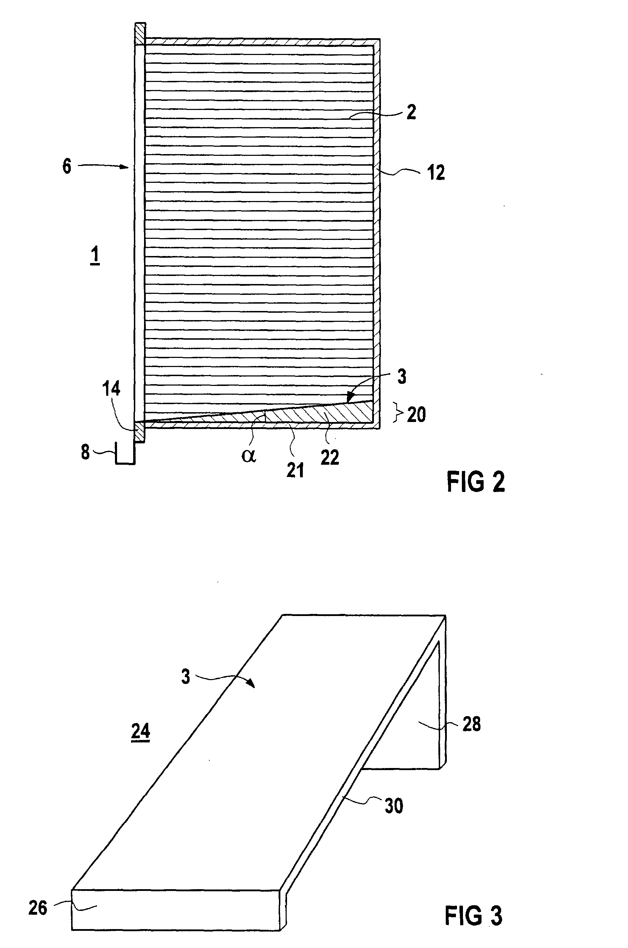

Figur 2 zeigt das Filtergehäuse 1 gemäß Figur 1 in Seitenansicht mit einem keilförmigen Anguß-Element 22, das den Innenboden 3 des Filtergehäuses 1 bildet. Das Anguß-Element 22 weist einen Neigungswinkel α von 3° bis 10°, insbesondere von ca. 5°, auf.

Die Neigung des Anguß-Elementes 22 und demzufolge die Neigung des Innenbodens 3 wird bei dessen Herstellung dadurch erzielt, daß das Filtergehäuse 1 schräg aufgestellt wird. Dabei entspricht die Schrägstellung des Filtergehäuses 1 dem gewünschten Neigungswinkel α des Innenbodens 3. Das Anguß-Element 22 wird dann durch Ausgießen des Bodenbereiches 20 der einzelnen Segmente 4 des Filtergehäuses 1 mit Flüssigkunststoff, z.B. Polyurethan, hergestellt. Dabei wird soviel Flüssigkunststoff in die einzelnen Segmente 4 vergossen, daß der Bodenbereich 20 bis hin zur Bodenkante 14 mit Flüssigkunststoff gefüllt ist.

Der ausgehärtete Flüssigkunststoff bildet dann in dem schräg gestellten Filtergehäuse 1 eine waagerechte Oberfläche. An den Seitenkanten 18 der Segmente 4 verbindet sich der Flüssigkunststoff mit den Filtern 2. Der Flüssigkunststoff erstarrt mit einer glatten Oberfläche. Darüber hinaus ist der Flüssigkunststoff durch seine Materialeigenschaften besonders wasserabweisend.

Nach der Aushärtung des Flüssigkunststoffs entsteht ein keilartiges Anguß-Element 22. Nach der Aufrichtung des Filtergehäuses 1 bildet die Oberfläche des Anguß-Elementes 22 einen in Richtung der Gehäusefront 6 gegenüber dem waagerechten Gehäuseboden 21 geneigten Innenboden 3. Bei einem Filtergehäuse 1 mit nur einem Segment 4 ist ein einziges Anguß-Element 22 ausreichend.

Alternativ zu dem aus einem Anguß-Element 22 gebildeten Innenboden 3 kann der Innenboden 3 aus einem Einschubelement 24 gebildet sein. Figur 3 zeigt ein derartige Einschubelement 24. Das Einschubelement 24 weist zwei Fußteile 26 und 28 auf. Die beiden Fußteile 26 und 28 sind über eine gerade Platte 30 miteinander verbunden. Das Fußteil 26 weist dabei eine niedrigere Höhe als das Fußteil 28 auf.

Das Einschubelement 24 ist in ein Segment 4 des Filtergehäuses 1 einschiebbar und steht auf dem Gehäuseboden 21. Dabei ist das niedrigere Fußteil 26 an der Gehäusefront 6 positioniert. Das höhere Fußteil 28 ist an der Rückwand 12 des Filtergehäuses 1 positioniert. Infolge der Höhendifferenz der beiden Fußteile 26 und 28 weist die Platte 30 eine Neigung auf, so daß die in Richtung zur Gehäusefront 6 gewünschte Neigung gegeben ist. Gegebenenfalls kann auch lediglich das Fußteil 28 zur Erzeugung der Neigung ausreichend sein. Die Fußteile 26 und 28 können alternativ auch durch Abstützung der Platte 30 an Wänden des Filtergehäuses 1 gebildet sein.

Das Einschubelement 24 kann beispielsweise aus einem Strangprofil gefertigt sein. Um eine formschlüssige Verbindung des Einschubelementes 24 zu den Seitenkanten 18 der Filter 2 und des Filtergehäuses 1 zu erzielen, sind die Seitenkanten 18 mit den Filtern 2 verklebt oder vergossen. Damit ist das Eindringen von Kondensationswasser in den Bodenbereich 20 unterhalb des Innenbodens 3 verhindert.

Figur 4 zeigt die Ablaufrinne 16 mit Befestigungselementen 32. Die Ablaufrinne 16 wird mittels der Befestigungselemente 32 an der Bodenkante 14 des Filtergehäuses 1 befestigt. Als Befestigungselemente 32 dienen beispielsweise Klemmen oder Schrauben. Die Ablaufrinne 16 ist an ihren Enden 34 mit benachbarten Ablaufrinnen 16 anderer Filtergehäuse 1 verbindbar. Somit kann das Kondensationswasser mehrerer benachbarter Filtergehäuse 1 einem (nicht dargestellten) gemeinsamen Fallrohr zugeführt werden. Darüber hinaus ist es auch möglich, daß das in der Ablaufrinne 16 angesammelte Kondensationswasser unmittelbar nur einem (nicht dargestellten) Fallrohr zugeführt wird.

## Patentansprüche

1. Filtergehäuse (1) mit Seitenwänden, mit Filtern (2) zur Reinigung von feuchten Gasen, und mit einem Innenboden (3), der eine glatte Oberfläche und bei waagrechter Betriebsaufstellung des Filtergehäuses (1) gegenüber der Horizontalen eine Neigung aufweist und dessen Seitenkanten (18) mit den Seitenwänden und/oder mit den Filtern (2) verbunden sind, **dadurch gekennzeichnet**, dass als Innenboden (3) mindestens ein Einschubelement (24) vorgesehen ist.

2. Filtergehäuse (1) mit Seitenwänden, mit Filtern (2) zur Reinigung von feuchten Gasen, und mit einem Innenboden (3), der eine glatte Oberfläche und bei waagrechter Betriebsaufstellung des Filtergehäuses (1) gegenüber der Horizontalen eine Neigung aufweist und dessen Seitenkanten (18) mit den Seitenwänden und/oder mit den Filtern (2) verbunden sind, **dadurch gekennzeichnet,** dass als Innenboden (3) mindestens ein Anguß-Element (22) dient.

3. Filtergehäuse (1) nach Anspruch 1, wobei das Einschubelement (24) aus einer Platte (30), einem niedrigen Fußteil (26) und einem höheren Fußteil (28) gebildet ist.

4. Filtergehäuse (1) nach einem der Ansprüche 1 bis 3, wobei an der Bodenkante (14), vorzugsweise an der Gehäusefront (6), eine Ablaufrinne (16) angeordnet ist.

5. Filtergehäuse (1) nach einem der Ansprüche 1 bis 4, wobei der Innenboden (3) gegenüber der Horizontalen einen Neigungswinkel α von 3° bis 10°, vorzugsweise 5°, aufweist.

6. Filtergehäuse (1) nach einem der Ansprüche 1 bis 5, wobei die Filter (2) vertikal und parallel zueinander angeordnet sind.

7. Filtergehäuse (1) nach einem der Ansprüche 1 bis 6, wobei als Filter (2) Papier- oder Glasfaserfilter vorgesehen sind.

## Claims

1. Filter housing (1) with side walls, with filters (2) for cleaning moist gases, and with an inner floor (3) which has a smooth surface and, in the horizontal operative position of the filter housing (1), has an inclination with respect to the horizontal and the lateral edges (18) of which are connected to the side walls and/or to the filters (2), **characterised in that** at least one insert element (24) is provided as the inner floor (3).

2. Filter housing (1) with side walls, with filters (2) for cleaning moist gases, and with an inner floor (3) which has a smooth surface and, in the horizontal operative position of the filter housing (1), has an inclination with respect to the horizontal and the lateral edges (18) of which are connected to the side walls and/or to the filters (2), **characterised in that** at least one integrally cast element (22) serves as the inner floor (3).

3. Filter housing (1) according to Claim 1, the insert element (24) being formed from a plate (30), a low leg part (26) and a higher leg part (28).

4. Filter housing (1) according to one of Claims 1 to 3, a drainage channel (16) being arranged at the bottom edge (14), preferably at the housing front (6).

5. Filter housing (1) according to one of Claims 1 to 4, the inner floor (3) having an angle of inclination α of from 3° to 10°, preferably 5°, with respect to the horizontal.

6. Filter housing (1) according to one of Claims 1 to 5, the filters (2) being arranged vertically and parallel to one another.

7. Filter housing (1) according to one of Claims 1 to 6, paper filters or glass fibre filters being provided as the filters (2).

## Revendications

1. Boîtier (1) de filtre ayant des parois latérales, des filtres (2) d'épuration de gaz humide et un fond (3) intérieur qui a une surface lisse et qui, lorsque le boîtier (1) de filtre est en position de fonctionnement horizontale, est incliné par rapport à l'horizontale, et dont les bords (18) latéraux sont reliés aux parois latérales et/ou aux filtres (2), **caractérisé en ce qu**'il est prévu comme fond (3) intérieur au moins un élément (24) pouvant être inséré.

2. Boîtier (1) de filtre ayant des parois latérales des filtres (2) d'épuration de gaz humide et un fond (3) intérieur qui a une surface lisse et qui, lorsque le boîtier (1) de filtre est en position de fonctionnement horizontale, est incliné par rapport à l'horizontale, et dont les bords (18) latéraux sont reliés aux parois latérales et/ou aux filtres (2), **caractérisé en ce qu**'on se sert comme fond (3) intérieur d'au moins un élément (22) coulé.

3. Boîtier (1) de filtre suivant la revendication 1, dans lequel l'élément (24) pouvant être inséré est constitué d'une plaque (30), d'une partie (26) basse de pied et d'une partie (28) de pied plus haute.

4. Boîtier (1) de filtre suivant l'une des revendications 1 à 3, dans lequel il est monté sur le bord (14) du fond de préférence sur l'avant (6) du boîtier une gouttière (16).

5. Boîtier (1) de filtre suivant l'une des revendications 1 à 4, dans lequel le fond (3) intérieur est incliné par rapport à l'horizontale d'un angle α d'inclinaison de 3 à 10°, de préférence de 5°.

6. Boîtier (1) de filtre suivant l'une des revendications 1 à 5, dans lequel les filtres (2) sont disposés verticalement et parallèlement les uns aux autres.

7. Boîtier (1) de filtre suivant l'une des revendications 1 à 6, dans lequel il est prévu comme filtres (2) des filtres en papier ou des filtres en fibre de verre.
